# EUROPEAN PATENT APPLICATION

(11) **EP 1 955 773 A2**
(43) Date of publication of application: **13.08.2008**
(21) Application number: 08002012.6
(22) Date of filing: 04.02.2008
(51) Int. Cl.: B05B 1/30, F16K 1/14, F16K 1/44

(54) **Sealing structure for opening/closing valve of spray gun**

(30) Priority: 08.02.2007 KR 20070002338 U
(71) Applicant: Son, Hyung Mo, Seoul (KR)
(72) Inventor: Son, Hyung Mo, Seoul (KR)
(74) Representative: van Walstijn, Bartholomeus G. G.

(57) **Abstract**

Disclosed is a sealing structure for an opening/closing valve (11) of a spray gun (10), and more particularly to a sealing structure for an opening/closing valve (11) of a spray gun (10) that can lengthen useful life by forming a double-structured sealing seat (30) opening and closing a fluid path (12) inside the spray gun operated at high-temperature and high-pressure and simultaneously increase reliability of sealing performance shutting off the fluid path (12).
The sealing structure for the opening/closing valve (11) of the spray gun (10) reduces spherical machining precision for the ball member (20) and improves productivity by simultaneously line-contacting or surface-contacting the ball member (20) opening and closing the valve unit (11) with the sealing seat (30) shutting off the fluid path.

## Description

### BACKGROUND OF THE INVENTION

### Field of the Invention

The present invention relates to a sealing structure formed in a valve unit of a spray gun, and more particularly, to a sealing structure for an opening/closing valve of a spray gun that can lengthen useful life by forming a double-structured sealing seat for opening and closing an inner fluid path of the spray gun operated at high-temperature and high-pressure and can improve reliability of sealing performance for shutting off the fluid path simultaneously.

### Description of the Related Art

Generally, there are problems of an opening/closing valve for spraying fluid. In other words, it is difficult to maintain sealing of the valve at high-pressure rather than low-pressure and it is easy to shorten useful life by severe abrasion of a member such as an O-ring for maintaining sealing when a temperature of sprayed fluid is high.

In order to solve these problems, there are types of technologies publicized in the Official Report for Korean Registration Utility Model No. 400543 (Oct. 31, 2005, hereinafter referred to as the prior art) of the present invention owner. Hereinafter, technical configuration of the present invention will be explained below after checking the problems to be solved in a technical field of the present invention according to the prior art.

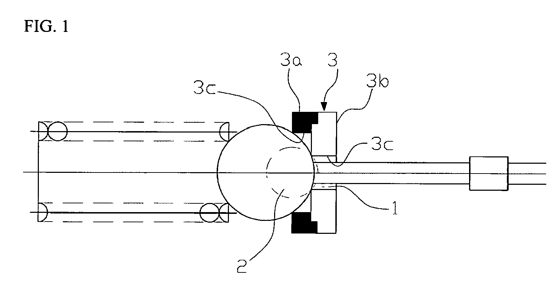

Referring to FIG. 1, a sealing structure according to the prior art, for preventing leakage of fluid caused by double-line contact and lengthening useful life of a seat unit (3) is formed by selecting a stepped structure including a ball (2) opening and closing a fluid path (1) and a double-structured seat unit (3) contacted to the ball (2), which a through hole (3c) of an auxiliary seat (3a) is larger than that of a main seat (3b) and then the main seat (3b) and the auxiliary seat (3a) are contacted to the ball (2).

The sealing structure is partially effective for preventing abrasion according as a contact size of the seat unit (3) contacted to an outer surface, in other words, the size of the auxiliary seat (3a) and the main seat (3b) is small. However, there are problems, in other words, it is difficult to demand pressure resistance performance to high-pressure spraying only due to double-line contact, and it is possible to reduce productivity by machining accuracy for the seat unit (3) line-contacted to the ball (2).

As shown as a solid line in FIG. 1, there are problems that it is difficult to maintain sealing when a size of the ball (2) is smaller than that of the through hole (3c) of the auxiliary hole (3a), including a problem due to line-contact caused when the size of ball (2) is larger than that of the through hole (3c) of the auxiliary hole (3a). In other words, as the ball (2) shown as a dotted line in FIG. 1, the reliability of sealing performance is decreased by disabling the auxiliary seat (3a) to seal the fluid path (1) when the size of through hole (3c) of the auxiliary seat (3a) is larger than a radius of the ball (2).

### SUMMARY OF THE INVENTION

Accordingly, an object of the present invention is to provide a sealing structure for an opening/closing valve of a spray gun that can lengthen useful life of a sealing seat having a double-structure for opening and closing a fluid path inside a spray gun at high-temperature and high-pressure, and to improve reliability of sealing performance in case of shutting off the fluid path.

According to another object of the present invention, there is to provide a sealing structure for an opening/closing valve of a spray gun that can reduce machining accuracy in case of spherical machining of a ball member and raise productivity by performing surface-contact together with line-contact, in other words, the contact between the ball member opening and closing a valve unit and a sealing seat shutting off a fluid path.

Additional advantages, objects and features of the invention will be set forth in part in the description which follows and in part will become apparent to those having ordinary skill in the art upon examination of the following or may be learned from practice of the invention.

According to an aspect of the present invention, there is provided a sealing structure for an opening/closing valve of a spray gun, which includes a ball member and a sealing seat. The sealing seat has a double-structure integrally formed with a soft seat and a hard seat, and the soft seat and hard seat have the same size.

The fluid path hole of a soft seat is larger than the fluid path hole of a hard seat and formed in a size smaller than a radius of the ball member, so as to save material cost for the soft seat.

### BRIEF DESCRIPTION OF THE DRAWINGS

The above and other objects, features and advantages of the present invention will be more apparent from the following detailed description taken in conjunction with the accompanying drawing, in which:
FIG. 1 is a diagram approximately illustrating an operation state of main components according to an exemplary embodiment of the prior art;
FIG. 2 is a diagram approximately illustrating the configuration of a sealing structure for an opening/closing valve of a spray gun and an operation state thereof according to a desirable exemplary embodiment of the present invention; and
FIG. 3 is a diagram approximately illustrating the configuration of a sealing structure for an opening/closing valve of a spray gun and an operation state thereof according to another exemplary embodiment of the present invention.

### DETAILED DESCRIPTION OF THE INVENTION

Hereinafter, preferred embodiments of the present invention will be described in detail with reference to the accompanying drawing. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the entire description of the present invention, the same drawing reference numerals are used for the same elements across various figures.

Hereinafter, the configuration according to a desirable exemplary embodiment of the present invention will be explained in detail with reference to figures.

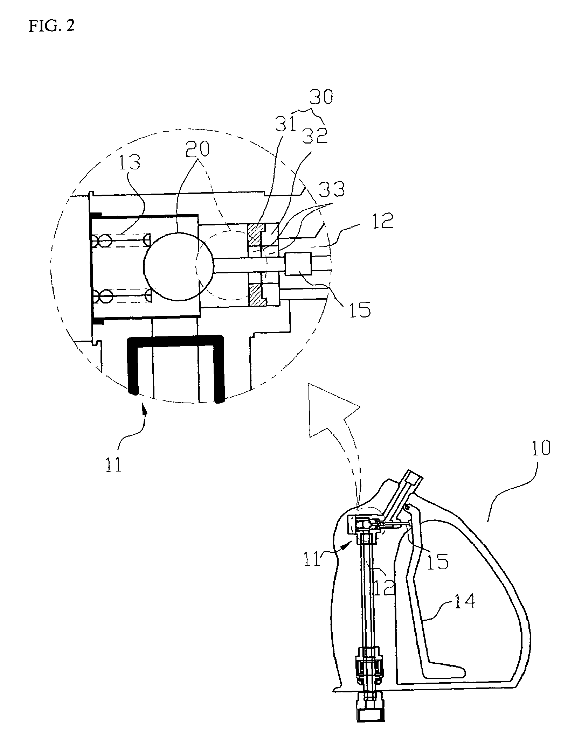

Referring to FIG. 2, a sealing structure is applied to a valve unit (11) inside a spray gun for spraying high-temperature and high-pressure fluid. The valve unit (11) approximately includes a ball member (20), an extension spring (13), a rod member (15) and a sealing seat (30). The extension spring (13) elastically supports between an inner wall of the valve unit (11) and the ball member (20), and the rod member (15) connected with a spray knob (14) opens/closes a fluid path (12) by pressurizing the ball member (20). In addition, the sealing seat (30) formed on the fluid path (12) is equipped in a position shutting off the fluid path (12) when the ball member is closely contacted by elastic force of the extension spring (13).

In other words, the sealing structure is formed with the ball member (20) opening and closing the valve unit (11) and the sealing seat (30) shutting off the fluid path (12) due to close contact to the ball member. Specifically, the sealing seat (30) has a double-structure integrally formed with a soft seat (31) and a hard seat (32).

The hard seat (32) is corresponded to pressure of fluid pressurizing the ball member (20) after the ball member is closely contacted by elastic force of the extension spring (13). On the other hand, the soft seat (31) improves water tightness due to close contact to the ball member (20) while absorbing shock between the hard seat (32) and the ball member (20) in case of close contact to the ball member (20). In other words, the soft seat (31) is equipped between the ball member (20) and the hard seat (32). Accordingly, it is desirable that the hard seat (32) is made of metal with high hardness, the soft seat (31) made of soft resin, which is a heatproof material dealing with a temperature of fluid.

Outer shapes of the soft seat (31) and the hard seat (31) are corresponded to an inner shape of the fluid path (12), and a circular fluid path (33) whose radius is the same shape, which is opened/closed by the ball member (20), is equipped in the center of the soft seat (31) and the hard seat (32). In case of close contact to the ball member (20), a contact surface of an outer surface of the closely contacted ball member (20) and the soft seat (31) is formed widely and definitely when the fluid hole (33) of the soft seat (31) and the hard seat (32) has the same shape, thereby increasing reliability of shutting off the fluid path (12) by means of the ball member (20).

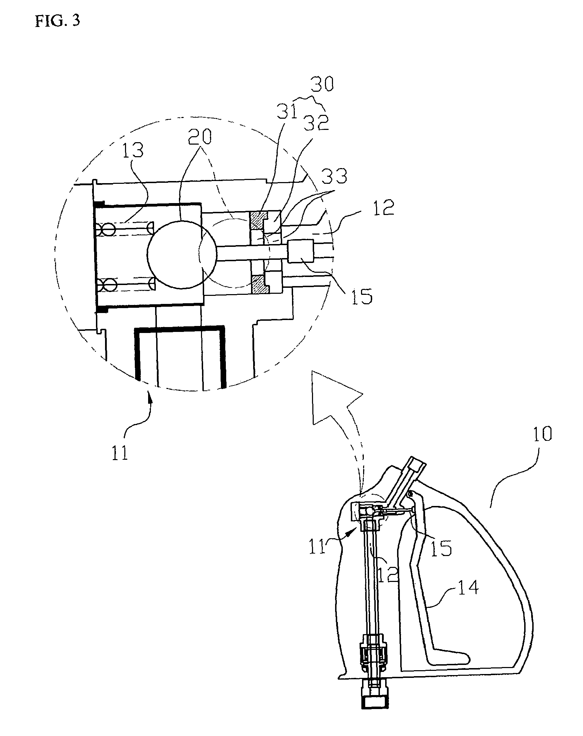

Alternatively, it is possible to differentiate a size of the fluid path hole (33) of the soft seat (31) and the hard seat (32) according to a predetermined condition of contact between the ball member (20) and the soft seat (31) and the hard seat (32). Referring to FIG. 3, the ball member (20) and the hard seat (32) are line-contacted in case of close contact to the ball member (20) and respective sizes of the fluid path hole (33) of the soft seat (31) and the hard seat (32) are differently formed within a range the ball member (20) and the soft seat (31) are surface-contacted or line-contacted. More specifically, it is possible that the size of the fluid path hole (33) of the soft seat (31) is larger than that of the fluid path hole (33) of the hard seat (32) and is smaller than a radius of the ball member (20). In this time, the fluid path hole (33) of the soft seat (31) and the hard seat (32) forms a predetermined step and the fluid path hole (33) of the soft seat (31) is larger than the hole (33) of the hard seat (31), thereby saving cost for raw materials.

Hereinafter, an operation relation will be explained below according to a desirable exemplary embodiment of the present invention.

As described above, according to another aspect of the present invention, there is provided a sealing structure is applied to the valve unit (11) inside a spray gun (10) spraying high-temperature and high-pressure fluid. An organic operation is performed by pressurizing the rod member (15) through the spray knob (14) of the spray gun (10) or releasing a pressurization state of the rod member (15) so as to enable a worker to spray high-temperature fluid at high-pressure.

When the worker pulls the spray knob (14) and pressurizes the rod member (15), the ball member contacted to an end of the rod member (15) and the sealing seat (30) is separated from the sealing seat (30) while being pushed backward. In this time, the extension spring (13) supported by another side of the ball member (20) is pressurized by pressure from the worker, accordingly, the valve unit (11) inside the spray gun (10) is opened and the fluid is sprayed toward a gun orifice of the spray gun (10).

When the worker puts the spray knob (14) of the spray gun (10) down, elastic repulsion force of the extension spring (13) supported between an inner wall of the valve unit (11) and the ball member (20) is generated while pressure pressurized through the rod member (15) is gone. The ball member (20) stops spraying of fluid by closing a fluid path (12) of fluid, more specifically the fluid path hole (33) while being contacted to the sealing seat (30), in other words, the soft seat (31) and the hard seat (32).

In this time, as shown in FIG. 2, according as a size of the fluid path hole (33) formed in the center of the soft seat (31) and the hard seat (32), the ball member (20) closely contacted by elastic force of the extension spring (13) is first contacted to the soft seat (31) and then supported by the hard seat (32). In other words, the soft seat (31) absorbs shock between the hard seat (32) and the ball member (20) in case of close contact to the ball member (20) and forms a contact surface to the ball member (20) widely, thereby increasing reliability of sealing for the fluid path hole (33). On the other hand, the ball member (20) closely contacted to the soft seat (31) due to elastic force of the extension spring (13) is pressurized by fluid with which the fluid path (12) is closed, and the pressure is supported by the hard seat (32) as described above.

Referring to FIG. 3, when the sizes of the fluid path hole (33) of the soft seat (31) and the hard seat (32) are differentiated, in other words, the size of the fluid path hole (33) of the soft seat (31) is larger than the fluid path hole (33) of the hard seat (32) and smaller than a radius of the closely contacted ball member (20), within a range that the ball member (20) and the hard seat (32) are line-contacted and simultaneously the ball member (20) and the soft seat (31) are surface-contacted or line-contacted, thereby performing operation in case of close contact to the ball member (20). However, a contact degree of the ball member (20) and the soft seat (31) and hard seat (32) is differentiated as described above.

However, the size of the fluid path hole (33) of the soft seat (31) corresponding to the hard seat (32) according to the size of the ball member (20) is differentiated, thereby saving consumption of materials for the soft seat (31) and accordingly saving manufacturing cost.

As described above, the sealing structure for the opening/closing valve of the spray gun according to the present invention produces the following effects.

First, the sealing structure for the opening/closing valve of the spray gun increases useful life of the double-structured sealing seat for opening and closing the fluid path inside the spray gun at high-temperature and high-pressure and simultaneously improves reliability of sealing performance in case of shutting off the fluid path.

Second, the sealing structure reduces spherical machining accuracy of the ball member and increases productivity by simultaneously line-contacting and surface-contacting the ball member opening and closing the valve unit with the sealing seat shutting off the fluid path.

It should be understood by those of ordinary skill in the art that various replacements, modifications and changes in the form and details may be made therein without departing from the spirit and scope of the present invention as defined by the following claims. Therefore, it is to be appreciated that the above described embodiments are for purposes of illustration only and are not to be construed as limitations of the invention.

## Claims

1. A sealing structure for an opening/closing valve of a spray gun, equipped in a valve unit (11) inside a spray gun (10) spraying high-temperature and high-pressure fluid, comprising:
a ball member (20) opening and closing the valve unit (11); and
a sealing seat (30) shutting off a fluid path (12) due to close contact to the ball member(20);
wherein the sealing seat (30) has a double-structure integrally formed with a soft seat (31) and a hard seat (32) respectively equipped with fluid path hole (33), the soft seat (31) is equipped between the ball member (20) and the hard seat (32), and the fluid path hole (33) of the soft seat (31) and the hard seat (32) has the same radius.

2. A sealing structure for an opening/closing valve of a spray gun, equipped in a valve unit (11) inside a spray gun (10) spraying high-temperature and high-pressure fluid, comprising:
a ball member (20) opening and closing the valve unit (11); and
a sealing seat (30) shutting off a fluid path (12) due to close contact to the ball member(20);
wherein the sealing seat (30) has a double-structure integrally formed with the soft seat (31) and the hard seat (32) respectively equipped with the fluid path hole (33), the soft seat (31) is equipped between the ball member (20) and the hard seat (32) and the fluid path hole (33) of the soft seat (31) is larger than the hole (33) of the hard seat (32) and smaller than the radius of the ball member (20).

3. The sealing structure of claim 1 or 2, wherein the soft seat (31) is made of heatproof resin and the hard seat (32) is made of metal.
